# EUROPEAN PATENT SPECIFICATION

(11) **EP 1 623 813 B1**
(45) Date of publication and mention of the grant of the patent: **10.11.2010**
(21) Application number: 05016803.8
(22) Date of filing: 02.08.2005
(51) Int. Cl.: B29C 49/04, C09K 19/38, F17C 1/16

(54) **Method for manufacturing liner for pressure resistant container and liner made of liquid crystal resin**
Verfahren zum Herstellen von einem Liner aus einem flüssigkristallinen Harz für einen Druckbehälter
Procédé de fabrication d'un revêtement interne à base de polymère liquide cristallin pour un récipient de pression

(30) Priority: 02.08.2004 JP 2004225464
(43) Date of publication of application: 08.02.2006
(73) Proprietor: Fuji Jukogyo Kabushiki Kaisha, Tokyo (JP); Polyplastics Co., Ltd., Tokyo 108-8280 (JP)
(72) Inventor: Matsuoka, Seiichi, c/o Fuji Jukogyo K.K., Tokyo (JP); Nezu, Shigeru, Tokyo (JP); Shimoda, Akihide, Fuji-shi Shizuoka (JP); Suzuki, Masato, Shizuoka (JP)
(74) Representative: Sajda, Wolf E.

(56) References cited:
- EP-A- 0 595 245
- EP-A- 0 636 470
- EP-A- 0 911 148
- EP-A- 0 911 151
- EP-A- 1 108 597
- EP-A- 1 308 474
- WO-A-2004/035659
- US-A- 5 204 443
- US-A- 5 508 374
- US-A1- 2002 175 168
- US-B1- 6 190 598

## Description

### BACKGROUND OF THE INVENTION

### <FIELD OF THE INVENTION>

The present invention relates to a method for manufacturing a liner for a pressure resistant container, and a liner made of a liquid crystal resin.

### <RELATED ART>

There are pressure resistant containers for storing /transporting pressure gases or low temperature gases such as CNG (Compressed Natural Gas) and CHG (Compressed Hydrogen Gas). A pressure resistant container made of a metal is high in strength and excellent in gas barrier performance. However, the pressure resistant container made of a metal has a large weight, and hence it has been difficult to apply to a fuel tank for an automobile or an aerospace vehicle, required to be reduced in weight. For this reason, one type of the pressure resistant container is formed with a cylindrical liner and a shell made of a fiber reinforced resin composite material formed around the outer circumference of the cylindrical liner, so as to reduce the weight.

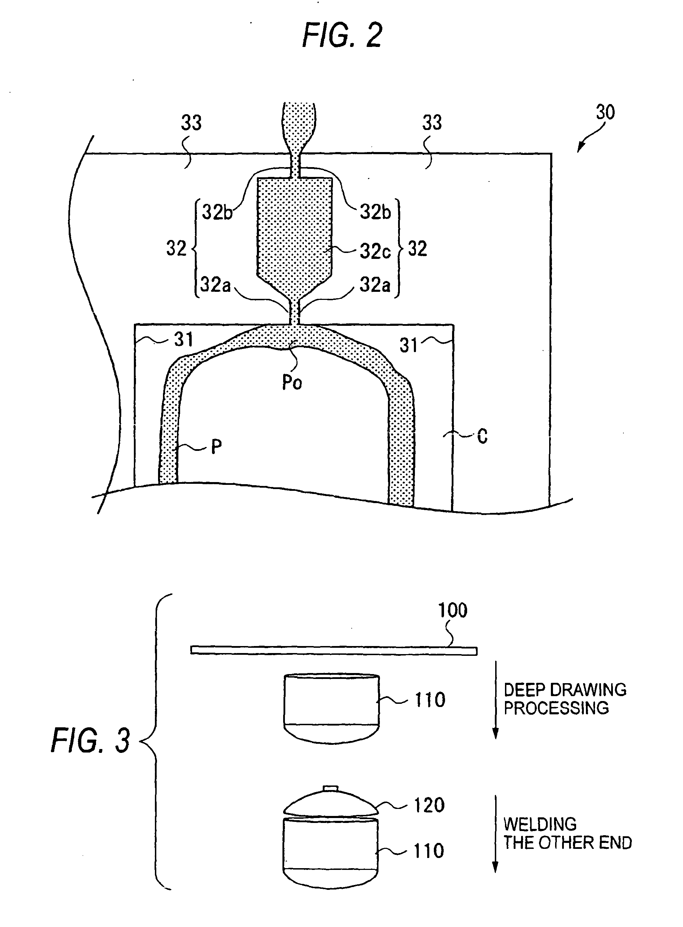

One type of the liner for forming such a pressure resistant container is made of a metal so as to obtain excellent gas barrier performance. A liner made of a metal is generally manufactured in the following manner. As shown in FIG. 3, a metal plate 100 is subjected to deep drawing processing, so that a container 110 having an opening is formed. To the opening of the container 110, a dome portion 120 manufactured in another step is welded.

The liner made of a metal, manufactured through the foregoing steps has a certain degree of load withstanding performance itself. Therefore, the thickness of the shell made of a composite material can be reduced to suppress the manufacturing cost. However, a large reduction in weight thereof cannot be expected. On the other hand, in another type of the liner, the metal liner is manufactured through the foregoing steps, and is subjected to chemical etching to form a very thin liner. A large reduction in weight of the liner canbe expected thereby, while an increase inmanufacturing cost is a problem.

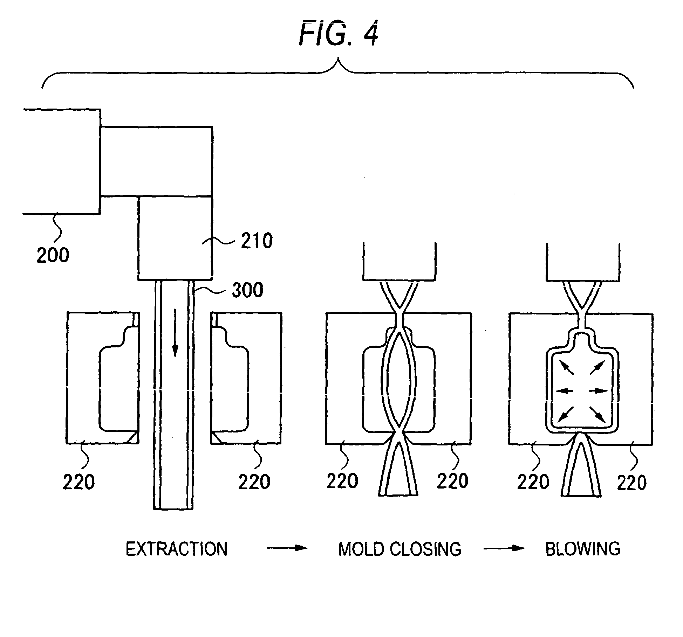

In order to solve such a problem of the liner made of a metal, a liner according to a related art is manufactured by a blow molding process with a thermoplastic resin. The blow molding process is a molding method in which, as shown in FIG. 4, a molten thermoplastic resin is extruded from the annular gap of a die 210 by means of an extruder 200 to form a parison 300 (extruding step) the parison 300 is placed between a pair of molds 220, and the molds 220 are closed (mold closing step), and a gas is blown into the interior of the parison 300 subjected to mold closing for molding of a liner (blowing step). By adopting the blow molding process, it is possible to largely reduce the processing time and the manufacturing cost of the liner.

Incidentally, the liner forming a pressure resistant container is essentially required to have "gas barrier performance". For this reason, a thermoplastic resin having excellent gas barrier performance is required to be adopted. In recent years, as such a thermoplastic resin having excellent gas barrier performance, a "liquid crystal resin" has been proposed. The liquid crystal resin has a gas barrier performance about 400000 or more times higher than that of the thermoplastic resin (high density polyethylene) currently applied as a liner material for a high pressure tank. The current high pressure tank to which a liner made of high density polyethylene has been applied is at a practical level under the condition of CNG of a pressure of 200 atmospheres. However, assuming a further increase in tank pressure (e.g., 700 atmospheres), or the case where hydrogen or helium with a small molecular weight has been used as a storage gas, a technology for applying a liquid crystal resin to a liner has been pursued (see, e.g., JP-A-06-238738).

However, the liquid crystal resin has a problem of low tensile break elongation in thermoplastic resins. For example, the tensile break elongation of high density polyethylene currently applied to a liner is 500 %. In contrast, the tensile break elongation of a general liquid crystal resin is about 2 %. Accordingly, in order to apply a liquid crystal resin to a liner, the improvement of the tensile break elongation has become essential.

Whereas, when a liner is molded with a blow molding process using a liquid crystal resin as a material, the "anisotropy", which the liquid crystal resin has, becomes a problem. The "anisotropy" is a property of a material to vary in characteristics thereof according to directions. When the anisotropy is large, the material tends to be broken in a direction in which the characteristic is inferior. As the tensile break elongation of a composite material for use in the exterior of the pressure resistant container, a value of about 1.5 % to 2 % is generally required when a carbon fiber has been adopted as a reinforced fiber. For this reason, the tensile break elongation of the liner is required to be "2 %" at minimum. Whereas, for preventing the liner from being broken before the breakage of the composite material, allowances in the design are required to be incorporated. To this end, a tensile break elongation of "3 % or more " is preferably achieved in all directions allowing for the anisotropy.

Further, the liquid crystal resin is poor in weldability. For this reason, when blow molding is carried out using the liquid crystal resin, a defect tends to occur at the pinch-off portion to be a weld portion. The presence of the defect appears as a reduction of the tensile break elongation of the pinch-off portion. The pinch-off portion is generally in the vicinity of the top of the dome portion of the pressure resistant container. As for the portion in the vicinity of the top of the dome portion, the thickness of the shell is larger than at other portions when the composite material is wound with a FW (Filament Winding) method to form the shell. For this reason, the amount of elongation generated is also smaller than at other portions, and can be suppressed to about 1 % according to the analysis. Therefore, a tensile break elongation of "1 % or more" is required at the pinch-off portion of the liner, and a tensile break elongation of "2 % or more" is preferably achieved, allowing for the design allowance.

JP-A-06-238738 discloses a technology in which by adding a specific filler such as glass fiber or a mineral filler to the liquid crystal resin, a blow molding characteristic is imparted to the liquid crystal resin.

A method for manufacturing a liner for a pressure resistant container comprising a heating and melting step of wholly aromatic polyester liquid crystal resin with polymer units of 6-hydroxy-2-naphthoic acid and 4-hydroxy benzoic acid residues and an extrusion blow molding step is known from EP-A-0636470.

Melt processable liquid crystal polyesteramides are known from US-A-5508374 and EP-A-0911151.

However, there has not been proposed a technology in which the "tensile break elongation" of the liquid crystal resin itself is improved, or the "anisotropy" thereof is improved without adding a filler. Whereas, when a liner is molded using a liquid crystal resin, as described above, the reduction of the tensile break elongation of the pinch-off portion (weld portion) is required to be inhibited. However, no technology for solving the problem of the reduction of the tensile break elongation of the pinch-off portion has been proposed yet.

### SUMMARY OF THE INVENTION

In accordance with the present invention, a method for manufacturing a liner for a pressure resistant container by a blow molding process using a liquid crystal resin, comprises: a resin melting step for heating and melting a specific wholly aromatic polyester amide liquid crystal resin including repeating units of: (I) a 6-hydroxy-2-naphthoic acid residue: 1 to 15 mol%, (II) a 4-hydroxybenzoic acid residue: 40 to 70 mol%, (III) an aromatic diol residue: 5 to 28.5 mol%, (IV) a 4-aminophenol residue: 1 to 20 mol%, and (V) an aromatic dicarboxylic acid residue: 6 to 29.5 mol%, and having a melting point of 270 °C to 370 °C, and having a melt viscosity of 60 Pa·s to 200 Pa·s at a shear rate of 1000/sec at a temperature higher by 10 °C to 20 °C than this melting point in a temperature range of the melting point to the melting point + 40 °C; a parison forming step of extruding and forming a cylindrical parison at an extrusion rate of 0.3 kg/min or more and less than 5 kg/min and at a shear rate of 50/sec or more and less than 1000/sec using the specific wholly aromatic polyester amide liquid crystal resin molten in the resin melting step; a mold closing step for placing the parison formed in the parison forming step between a pair of molds forming a cylindrical cavity, and closing the molds; and a molding step of blowing a gas into the interior of the parison subjected to mold closed in the mold closing step, and molding of a liner.

In accordance with one or more embodiments of the present invention, a wholly aromatic polyester amide liquid crystal resin having a specific composition is formed. The liquid crystal resin is heated and molten at a specific temperature. Blow molding is performed by extruding a cylindrical parison at a specific extrusion rate and shear rate. Therefore, it is possible to achieve a tensile break elongation of "2% or more" in all the directions allowing for the anisotropy in the body portion of the liner. In addition, it is possible to achieve a tensile break elongation of "1% or more" in the pinch off portion of the liner. Further, by taking advantage of the characteristics of the liquid crystal resin, it is possible to obtain a liner having excellent gas barrier performance.

In accordance with one or more embodiments of the present invention, the blow-up ratio which is the ratio of the outer diameter of the parison formed in the parison forming step and the diameter of the cavity formed by the molds is set at 2.0 to 8.0 .

In accordance with one or more embodiments of the present invention, the ratio (blow-up ratio) of the outer diameter of the parison formed in the parison forming step and the diameter of the cavity formed by the molds is set at a specific ratio (2.0 to 8.0). Therefore, it is possible to improve the anisotropy of the liquid crystal resin, and it is possible to improve the tensile break elongation both in the vertical direction and in the horizontal direction of the body portion of the liner.

In accordance with one or more embodiments of the present invention, the molds are heated in a temperature range of 40 °C to 150 °C when the mold closing step is carried out.

In accordance with one or more embodiments of the present invention, the molds are heated in a specific temperature range of 40 °C to 150 °C when the mold closing step is performed. Therefore, it is possible to enhance the weldability of the liquid crystal resin in the pinch off portion of the liner, and it is possible to improve the tensile break elongation of the pinch off portion.

In accordance with one or more embodiments of the present invention, the value obtained by dividing the mold closing pressure by the thickness of the pinch off portion is set at 3.5 MPa/cm or more when the mold closing step is carried out.

In accordance with one or more embodiments of the present invention, the value obtained by dividing the mold closing pressure by the thickness of the pinch off portion is set at a specific threshold value (3.5 MPa/cm) or more when the mold closing step is carried out. Therefore, it is possible to enhance the weldability of the liquid crystal resin in the pinch off portion of the liner, and it is possible to improve the tensile break elongation of the pinch off portion.

In accordance with one or more embodiments of the present invention, dual pinch portions are provided in the molds, and a gap is formed between the dual pinch portions upon closing of the molds in the mold closing step.

In accordance with one or more embodiments of the present invention, the dual pinch portions are disposed in the molds, and a gap is formed between the dual pinch portions upon closing of the molds. Therefore, when the parison is pinched off in the mold closing step, it is possible to store the liquid crystal resin in the gap formed between the dual pinch portions. Therefore, it is possible to prevent the liquid crystal resin from flowing from the pinch off portion of the liner to the outside of the molds when mold closing is carried out. Therefore, it is possible to inhibit the reduction of the thickness of the pinch off portion of the liner. As a result, it is possible to enhance the weld strength of the liquid crystal resin in the pinch off portion, and it is possible to improve the tensile break elongation of the pinch off portion.

The liner obtainable by the method of the present invention, has a tensile break elongation in every direction of a body portion of 2 % or more. Preferably the tensile break elongation of the pinch off portion is 1 % or more.

Accordingly, they can satisfy the required characteristics necessary for the body portion and the pinch off portion of the liner for a pressure resistant container. Further, the liners made of a liquid crystal resin in accordance with the invention are excellent in gas barrier performance owing to the characteristics of the liquid crystal resin. Therefore, they can be preferably used as a liner for a pressure resistant container substituting for a liner made of high density polyethylene.

In accordance with one or more embodiments of the present invention, the tensile break elongation in every direction of a body portion is 3 % or more.

In accordance with one or more embodiments of the present invention, the liner made of a liquid crystal achieves a tensile break elongation of "3 % or more" in every direction of the body portion, which surpasses the required characteristics necessary for the body portion of the liner for a pressure resistant container. Therefore, it is more preferable as the liner for a pressure resistant container.

In accordance with one or more embodiments of the present invention, the tensile break elongation of the pinch off portion is 2 % or more.

In accordance with one or more embodiments of the present invention, the liner made of a liquid crystal achieves a tensile break elongation of "2 % or more " in the pinch off portion, which surpasses the required characteristics necessary for the body portion of the liner for a pressure resistant container. Therefore, it is more preferable as the liner for a pressure resistant container.

In accordance with one or more embodiments of the present invention, the thickness of the pinch off portion is 2 mm or more.

In accordance with one or more embodiments of the present invention, the liner made of a liquid crystal resin has a thickness of the pinch off portion equal to a specific threshold value (2 mm) or more, resulting in a high weld strength of the pinch off portion. This results in the one having high tensile break elongation.

In accordance with one or more embodiments of the present invention, a wholly aromatic polyester amide liquid crystal resin having a specific composition is prepared. The liquid crystal resin is heated and molten at a specific temperature. Blow molding is performed by extruding a cylindrical parison at a specific extrusion rate and shear rate. Thus, it is possible to achieve the improvement of the "tensile break elongation" and the improvement of the "anisotropy" of the blow molded product (liner for a pressure resistant container). As a result, it is possible to obtain a liner effectively utilizing the excellent gas barrier performance of the liquid crystal resin.

Other aspects and advantages of the invention will be apparent from the following description and the appended claims.

### BRIEF DESCRIPTION OF THE DRAWINGS

Fig. 1 is an illustrative diagram showing a configuration of a blow molding device and the like for use in a manufacturing method in accordance with one or more embodiments of the present invention.
Fig. 2 is an enlarged diagram of dual pinch portions (portions II) of molds of the blow molding device shown in FIG. 1.
FIG. 3 is an illustrative diagram showing a method for manufacturing a conventional liner made of a metal.
FIG. 4 is an illustrative diagram for illustrating a method for manufacturing a liner made of a resin with a blow molding process in accordance with a related art.

### DESCRIPTION OF THE PREFERRED EMBODIMENTS

Embodiments of the invention will be described with reference to the accompanying drawings.

First, a description will be given to the liquid crystal resin for use in a manufacturing method.

### <Composition and characteristics of wholly aromatic polyester amide liquid crystal resin>

There is adopted a specific liquid crystal resin (wholly aromatic polyester amide liquid crystal resin) including the following repeating units (I) to (V):
(I) a 6-hydroxy-2-naphthoic acid residue: 1 to 15 mol%,
(II) a 4-hydroxybenzoic acid residue: 40 to 70 mol%,
(III) an aromatic diol residue: 5 to 28.5 mol%,
(IV) a 4-aminophenol residue: 1 to 20 mol%, and
(V) an aromatic dicarboxylic acid residue: 6 to 29.5 mol%,
and having a melting point of 270 °C to 370 °C, and having a melt viscosity of 60 Pa·s to 200 Pa·s at a shear rate of 1000/sec at a temperature higher by 10 °C to 20 °C than this melting point.

The total amount of the repeating units (I) to (V) is 100 mol%. Incidentally, the "liquid crystal resin" is the one showing optical anisotropy upon melting. The property of showing anisotropy upon melting can be confirmed by a general polarization monitoring method utilizing a cross polarizer. Being a liquid crystal resin allows excellent characteristics of very low gas transmittance (Very high gas barrier performance), dimensional stability, chemical resistance, and the like to be expressed.

The (I) 6-hydroxy-2-naphthoic acid residue is in a proportion of 1 to 15 mol%, and in particular preferably in a proportion of 2.0 to 10 mol%. The (II) 4-hydroxybenzoic acid residue is in a proportion of 40 to 70 mol%, and in particular preferably in a proportion of 50 to 65 mol%. The (III) aromatic diol residue is in a proportion of 5 to 28.5 mol%, and in this range, preferably in a proportion of 5 to 25 mol%, and further in particular preferably in a proportion of 10 to 20 mol%. The (IV) 4-aminophenol residue is in a proportion of 1 to 20 mol%, and in this range, preferably in a proportion of 2 to 15 mol%, and further in particular preferably in a proportion of 2.5 to 10 mol%. The (V) aromatic dicarboxylic acid residue is in a proportion of 6 to 29.5 mol%, and in this range, preferably in a proportion of 8 to 25 mol%, and further in particular preferably in a proportion of 10 to 20 mol%.

The (III) aromatic diol residue and the (V) aromatic dicarboxylic acid residue are each a divalent group containing at least one aromatic ring in which two or more aromatic rings may be bonded by a methylene group, an ethylene group, an isopropylidene group, a hexafluoroisopropylidene group, a carbonyl group, a sulfur atom, a sulfone group, a sulfoxide group, an oxygen atom, an alkylenedioxy group having 2 to 6 carbon atoms, or the like. They are preferably one, or two or more selected from a 1,4-phenylene group, a 1,3-phenylene group, a 2, 6-naphthalene group, and a 4, 4' -biphenylene group.

Polyester amide obtained by partially introducing an amide bond into a polyester skeleton containing a hydroxybenzoic acid residue as a main component has a large tensile break elongation, and hence it is preferable for obtaining a blow molded product. However, an excessively large number of amide bonds results in degradation of hue and a reduction of thermal stability. Therefore, the amide bonds are required to be limited in a range of 20 mol% or less based on the total amount of the bond units. By adopting the wholly aromatic polyester amide liquid crystal resin in accordance with the present invention, it is possible to obtain a favorable blow molded product.

### <Method for forming a wholly aromatic polyester amide liquid crystal resin>

The wholly aromatic polyester amide liquid crystal resin in accordance with the embodiments is a liquid crystal resin including the repeating units (I) to (V), and having the foregoing characteristics. The method for obtaining a wholly aromatic polyester amide liquid crystal resin in accordance with the present invention has no particular restriction. However, a preferred obtaining method is as follows. A liquid crystal resin having a specific melting point, and not subjected to a specific heat treatment (describedlater) (which is hereinafter referred to as a "liquid crystal resin before a specific heat treatment") is obtained. The liquid crystal resin before a specific heat treatment is subj ected to a specific heat treatment, and thereby increased to a specific melt viscosity characteristic. Below, a preferred method for obtaining a wholly aromatic polyester amide liquid crystal resin in accordance with the present invention (a method for obtaining a liquid crystal resin before a specific heat treatment, and a specific heat treatment method) will be described.

### 1. Method for obtaining liquid crystal resin before specific heat treatment

For specifically obtaining a liquid crystal resin before a specific heat treatment, various ones having a general ester or amide forming capability are used as raw material compounds. As the raw material compound necessary for obtaining the liquid crystal resin before a specific heat treatment, 6-hydroxy-2-naphthoic acid, 4-hydroxybenzoic acid, aromatic diol, 4-aminophenol, or aromatic dicarboxylic acid may be used in the form as it is, or if required in the polycondensation reaction, the one obtained by modifying each functional group with various derivatives such as an ester or amide thereof may also be used.

The liquid crystal resin before a specific heat treatment can be obtained by a direct polymerization process or polymerization using an ester interchange process. For the polymerization, generally, a solvent polymerization process, a melt polymerization process, a slurry polymerization process, or the like is used. For these polymerizationprocesses, various catalysts may be used. Typical examples thereof may include dialkyl tin oxide, diaryl tin oxide, titanium dioxide, alkoxytitanium silicates, titanium alcoholates, alkali and alkalne-earth metal salts of carboxylic acid, and Lewis acid salts such as boron trifluoride. The amount of the catalyst to be used is preferably 0.001 to 1 wt% based on the total weight of the monomers.

In the liquid crystal resin before a specific heat treatment, in order to simultaneously cause an increase in amount of the crystal components and an increase in molecular weight due to the specific heat treatment, the melting point by DSC (differential scanning calorimetry) is required to be set at 270 to 350 °C (preferably 290 to 350 °C), and the melt viscosity at a shear rate of 1000/sec at a temperature higher by 10 to 20 °C than the melting point is required to be set in the range of 10 to 45 Pa·s (preferably 10 to 35 Pa·s) .

When the melting point of the liquid crystal resin before the specific heat treatment is less than 270 °C, the amount of the microcrystal components increases, but the increase in molecular weight does not substantially occur by the specific heat treatment, resulting in insufficient improvement of the blow molding characteristic. Whereas, when the melting point of the liquid crystal resin before the specific heat treatment exceeds 370 °C, a heat treatment for a long time at a high temperature in the vicinity of the melting point becomes necessary in order to increase the molecular weight. Accordingly, it is not possible to suppress the formation of the products of the side reaction, and hence it is not possible to obtain a liquid crystal resin with satisfactory quality.

Whereas, when for the liquid crystal resin before the specific heat treatment, the melt viscosity at a shear rate of 1000/sec at a temperature higher by 10 to 20 °C than the melting point (270 to 370 °C) is less than 10 Pa.s, it becomes difficult for the liquid crystal resin to hold the particle shape during the specific heat treatment. Whereas, when the melt viscosity exceeds 45 Pa.s, the stirring torque during polymerization of the liquid crystal resin becomes large. This necessitates the expensive production facilities with high stirring capability, which is economically undesirable.

### 2. Specific heat treatment process

Then, a description will be given to the process of the specific heat treatment for obtaining the wholly aromatic polyester amide liquid crystal resin in accordance with the embodiments. The liquid crystal resin before the specific heat treatment is subjected to the specific heat treatment with its particle form held. This enables the increase in molecular weight, and the generation of a large number of microcrystals.

The shape of the particles of the liquid crystal resin before the specific heat treatmentmaybe spherical, cylindrical, prismatic, or the like, and has no particular restriction. However, the diameter or any side of particles is preferably 3 mm or more and 10 mm or less, and further preferably 3 to 5 mm on average of total particles.

The temperature of the specific heat treatment is required to be 260 °C or more, and is required to be a temperature lower by 10 °C than the temperature corresponding to the so-called melting point (Tm) which is a transition point from the crystals of the liquid crystal resin to the liquid crystal phase (Tm -10 °C), or lower (preferably Tm-20 °C or less). The melting point Tm may be difficult to determine by the melting peak with DSC for a liquid crystalline form. Therefore, it is desirably determined in accordance with the phase change under crossed nicols in a microscope.

When the temperature of the specific heat treatment is too high, and in the vicinity of the melting point, particles of the liquid crystal resin fuse during the specific heat treatment, and become difficult to handle in a step of blow molding or the like. This is undesirable from the viewpoint of the practical utility. On the other hand, when the temperature of the specific heat treatment is too low, almost no effect is produced on the prevention of draw down in blow molding. For this reason, the temperature of the specific heat treatment is required to be kept at 260 °C or more for any liquid crystal resin.

As a preheat treatment before performing the specific heat treatment, a process in which the liquid crystal resin particles are heated at a temperature of less than the temperature (260 °C) for 0.5 to 4 hours, a process in which heating is carried out by raising the temperature continuously from the low temperature to high temperature side (e.g., at a heating rate of 5 to 10 °C/hr) or stepwise, or the like is adopted. This can simplify the steps, and hence may be industrially preferable.

The time of the specific heat treatment is desirably set at 5 hours or more (preferably 8 hours or more) and 30 hours or less (preferably 20 hours or less) with the particle form kept. When the time of the specific heat treatment is shorter than the foregoing range, the melt viscosity insufficiently increases. This necessitates the molding temperature for blow molding to be decreased to the vicinity of the melting point. Therefore, a problemof moldability such as insufficient drawing of molten resin upon blowing up tends to occur, unfavorably resulting in a large restriction on the molding conditions. Whereas, when the time of the specific heat treatment becomes extremely longer than the foregoing range, the hue of the surface of each resin particles may be deteriorated, or the characteristics of the liquid crystal resin may be deteriorated due to the side reaction.

By the specific heat treatment, in the liquid crystal resin in the form of particles, a large number of microcrystals are formed, and at the same time, the molecular weight increases. As for the molecular weight, changes before and after the heat treatment can be confirmed by a GPC measurement method, a solution viscosity method, or a melt viscosity method. In general, the presence of crystals can be confirmed by thermal measurement such as DSC. The crystal structure grows more, or a larger number of microcrystals are formed after the specific heat treatment than before the specific heat treatment. As a result, the melting point after the specific heat treatment becomes higher by 2 to 30 °C than the melting point before the specific heat treatment.

By performing the specific heat treatment, the melt viscosity (the value at a shear rate of 1000/sec at a temperature higher by 10 °C to 20 °C than the melting point of the resin before the heat treatment) of the liquid crystal resin becomes 60 to 200 Pa·s. Thus, the melt viscosity becomes 60 to 200 Pa.s, which has been largely increased as compared with the value before the specific heat treatment of 10 to 45 Pa.s. When the melt viscosity of the liquid crystal resin after the specific heat treatment is less than 60 Pa.s, the draw down resistance becomes insufficient. At more than 200 Pa·s, the drawability upon melt-blowing up becomes insufficient.

Any type of devices are generally acceptable so long as the specific heat treatment is carried out under a nitrogen flow, or under a dry air, or under reduced pressure. As the devices for the specific heat treatment, specifically, mention may be made of a material stationary type, a mechanical transport type, a mechanical stirring type, an airborne dry stirring type, and the like. Preferably, mention may be made of a vacuum dryer of a tumble dryer type, and the like. For the vacuum dryer, the degree of vacuum is 0.01 to 50 kPa (preferably, 0.01 to 10 kPa).

Incidentally, in the embodiments, one, or two or more of various known inorganic and organic fillers in the form of fiber, particle, or plate may be added to the liquid crystal resin before the specific heat treatment or after the specific heat treatment according to the intended use purpose. For the use of these fillers, if required, a sizing agent or a surface treating agent may be used. Whereas, the amount of the filler to be added is 1 to 80 wt%, and preferably 2 to 30 wt% based on the total amount of the composition.

Further, to the wholly aromatic polyester amide liquid crystal resin in accordance with the embodiments, other thermoplastic resins may be auxiliarily used in such a range as not to impair the object of the invention. Further, known additives such as an antioxidant, a lubricant, and a flame retardant generally used for the thermoplastic rein may be selectively added according to the intended purpose.

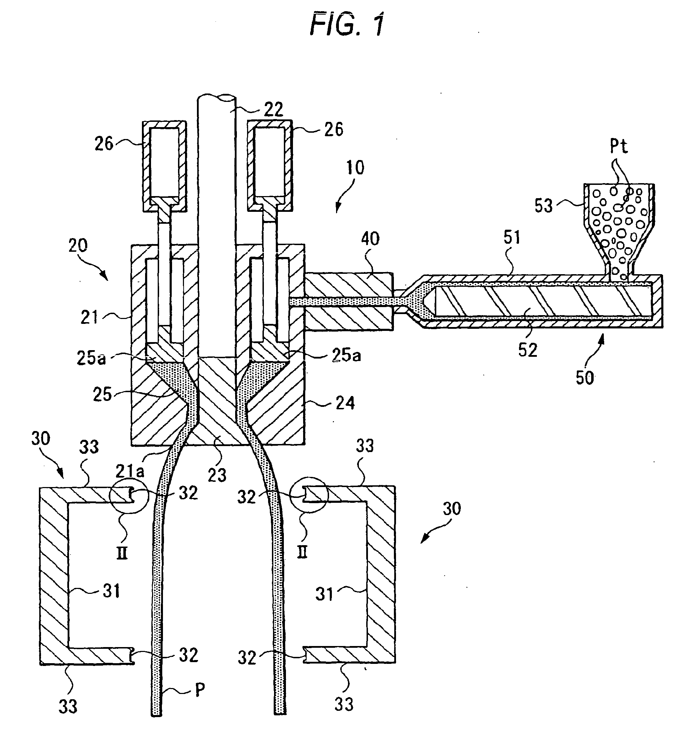

Then, by reference to FIGS. 1 and 2, a description will be given to an example of a configuration of a blow molding device or the like for use in a manufacturing method in accordance with the embodiments of the invention.

A blow molding device 10 includes, as shown in FIG. 1, an accumulator head 20 for extruding a liquid crystal resin introduced in the heated and molten state through the annular gap, and forming a cylindrical parison P, a pair of molds 30 arranged symmetrically with respect to the longitudinal axis of the parison P, and disposed in a mutually separable manner, and a blow pin (not shown) driven by a prescribed driving unit for blowing a compressed air into the interior of the parison P for blow molding.

The accumulator head 20 includes, as shown in FIG. 1, a hollow cylindrical main body (which is hereinafter referred to as a "head main body") 21, a center shaft 22 disposed along the vertical center axis of the head main body 21, a core 23 fixed at the lower end side of the center shaft 22, a die 24 disposed at the lower end portion of the head main body 21, and disposed around the outer circumferential surface of the core 23. Thus, the center shaft 22 is moved up and down, which changes the vertical position of the core 23 relative to the die 24 to adjust the space between the core 23 and the die 24. As a result, it is possible to appropriately adjust the thickness of the parison P.

Whereas, in the interior of the head main body 21 of the accumulator head 20, an extrusion cylinder 25 for once accumulating the supplied liquid crystal resin, and then extruding the liquid crystal resin toward an extrusion outlet 21a formed by the core 23 and the die 24 is formed. Thus, to a piston 25a of the extrusion cylinder 25, a hydraulic driving unit 26 is mounted.

The left and right molds 30 respectively include, as shown in FIGS. 1 and 2, molding surfaces 31 for forming a cylindrical cavity C upon closing, and dual pinch portions 32 for pinching off the upper and lower edges of the parison P. The cavity C formed by the left and right molding surfaces 31 has the same shape as the outside shape of the liner for the pressure resistant container to be manufactured. It is configured such that the left and right molds 30 are openably and closably driven by means of an openably and closably driving unit (not shown).

The dual pinch portions 32 of the molds 30 are disposed at the edges of the upper and lower walls 33 disposed at right angles to the parison longitudinal axis, and as shown in FIG. 2, includes inner (the cavity C side) first pinches 32a, and outer second pinches 32b. Accordingly, when the molds 30 are closed, a gap 32c interposed between the first pinches 32a and the second pinches 32b is formed at the vertical intermediate portion of the edges of the walls 33. The gap 32c serves as a "resin reservoir" when the mold closing of the molds 30 is performed to pinch off the parison P by the dual pinch portions 32. This prevents the liquid crystal resin from flowing out from the pinch off portion of the parison P to the outside.

Whereas, to the side of the upper part of the accumulator head 20 of the blow molding device 10, as shown in FIG. 1, a material supply unit 50 for supplying the liquid crystal resin into the accumulator head 20 is connected via a junction block 40. The material supply unit 50 includes a cylindrical cylinder main body 51, a screw 52 rotatably accommodated in the cylinder main body 51, and a hopper 53 for charging pellets Pt as a material for molding into the cylinder main body 51.

It is configured such that the operations of various driving units (such as a driving unit 26 for driving a extrusion cylinder 25 of the accumulator head 20, the openably and closably driving unit of the molds 30, and the driving unit of a blow pin) of the blow molding device 10, and the operation of the screw 52 of the material supply unit 50 described above are controlled by a controller (not shown). Further, on the outer circumferential surface side of the molds 30, and on the outer circumferential surface side of the cylinder main body 51 of the material supply unit 50, a heater (not shown) is disposed for heating the molds 30 and the interior of the cylinder main body 51 to a prescribed temperature.

Then, a description will be given to a method for manufacturing a liner for a pressure resistant container with a blow molding process using the liquid crystal resin and the blow molding device 10 in accordance with the embodiments, and the like. Incidentally, the liners for a pressure resistant container manufactured by the manufacturing method in accordance with the embodiments are liners made of a liquid crystal resin in accordance with the present invention.

First, the wholly aromatic polyester amide liquid crystal resin is obtained through the foregoing steps, and a plurality of pellets Pt are prepared with the liquid crystal resin. Then, the pellets Pt are charged into the hopper 53 of the material supplyunit 50 shown in FIG. 1. The screw 52 is rotatably driven at a prescribed rotation rate, and the cylinder main body 51 is heated by a heater. As a result, the pellets Pt are heated and molten in the cylinder main body 51 (resin melting step).

The heating temperature in the resin melting step is required to be the melting point of the liquid crystal resin in accordance with the present invention (270 to 370 °C) or higher, and the melting point + 40 °C or less (preferably in a temperature range of the melting point to the melting point + 30 °C). In order to improve the draw down resistance of the liquid crystal resin, a lower heating temperature is more preferred. However, heating is required to be carried out to the melting point or higher in view of the drawability upon melting necessary for blow up. The weldability apparently differs between at the melting point or more and at less than the melting point. At less than the melting point, molding is also possible. However, the melt drawability (tensile break elongation) is reduced, so that it becomes impossible to take advantage of the excellent characteristics of the liquid crystal resin. On the other hand, when the heating temperature exceeds the melting point + 40 °C, the draw down resistance is unfavorably reduced.

Then, in an initial state in which the piston 25a of the extrusion cylinder 25 of the blow molding device 10 is kept at a prescribed raised position, the molten liquid crystal resin is supplied from the material supply unit 50 into the head main body 21 (into the extrusion cylinder 25) of the accumulator head 20 as a resin material for molding. At the instant when a prescribed amount of the liquid crystal resin has been supplied, the driving unit 26 is operated to move the piston 25a of the extrusion cylinder 25 downwardly. This extrudes the liquid crystal resin filled in the extrusion cylinder 25 through the annular gap formed between the core 23 and the die 24 from the extrusion outlet 21a to form a cylindrical parison P (parison forming step).

When the cylindrical parison P is extruded from the extrusion outlet 21a, the amount of the liquid crystal resin to be extruded is set at 0.3 kg or more and less than 5 kg (extrusion rate 0.3 kg/min or more and less than 5 kg/min), and the shear rate at the extrusion outlet 21a of the liquid crystal resin is set at 50/sec or more and less than 1000/sec. When the extrusion rate of the liquid crystal resin is less than 0.3 kg/min, or the shear rate is less than 50/sec, the parison P is cooled, resulting in a reduction of the weldability of the pinch off portion in the blow molding step described later. As a result, it is not possible to obtain afavorablemoldedproduct. On the other hand, when the extrusion rate of the liquid crystal resin is 5 kg/min or more, or the shear rate is 1000/sec or more, the upright standing property of the parison P is reduced. As a result, it becomes difficult to obtain a molded product having a uniform thickness, and the tensile break elongation in a direction at right angles to the longitudinal axis of the parison P is reduced, so that it is not possible to obtain a favorable molded product.

Then, as shown in FIG. 1, with the parison P arranged between the left and right molds 30, the openaly and closably driving unit is driven, thereby to close the molds 30 (mold closing step). In this embodiment, the ratio (blow-up ratio) of the diameter of the parison P formed in the parison forming step and the diameter of the cavity C (see, FIG. 2) formed by the left and right molding surfaces 31 by closing of the molds 30 is set at 2.0 to 8.0. By setting the blow-up ratio in such a range, it is possible to further improve the anisotropy between the direction of the longitudinal axis of the parison P and the direction at right angles to the direction of the longitudinal axis.

When the blow-up ratio is less than 2.0, the parison P has been hardly drawn in the direction at right angles to the direction of the longitudinal axis thereof, and hence unfavorably, it is easily deformed. On the other hand, when the blow-up ratio exceeds 8.0, the parison P has been largely drawn in the direction at right angles to the direction of the longitudinal axis. Accordingly, the tensile break strength increases, but the tensile break elongation decreases. As a result, when the pressure in the interior of the liner increases, breakage unfavorably becomes more likely to occur. Incidentally, when the blow-up ratio is set in the range of 2.0 to 6.0, it is favorably possible to still further improve the anisotropy.

Whereas, in this embodiment, the molds 30 are heated at a temperature in the range of 40 to 150 °C in the mold closing step by means of a heater. By heating the molds 30 in such a temperature range during mold closing, it is possible to enhance the weldability of the pinch off portion Po (see, FIG. 2) of the parison P. When the temperature of the molds 30 is less than 40 °C, the parison P is cooled upon contact with the molds 30, unfavorably resulting in the reduction of the adhesion strength of the pinch off portion Po. On the other hand, when the temperature of the molds 30 exceeds 150 °C, the cooling rate of the parison P is slowed. Accordingly, the parison P is stretched thinly by blow up, unfavorably resulting in a reduction of the strength of the pinch off portion Po.

Incidentally, it is preferable to adopt such a dual pinch portion 32 (see, FIG. 2) as in this embodiment than to adopt a general single pinch portion as the shape of the pinch portion of each mold 30 because the pinch off portion Po of the parison P can be thereby increased in thickness. This is because of the following: the gap formed by the dual pinch portions 32 functions as a "resin reservoir", which can prevent the resin from flowing from the pinch off portion Po of the parison P to the outside. For example, when the thickness of the pinch off portion Po is set at 2 mm or more (more preferably 3 mm or more), the pinch off portion Po increases weld strength, and hence it favorably has high tensile break elongation.

However, in the case where the thickness of the pinch off portion Po has increased, the adhesion force between portions of the parison P is weakened when the mold closing pressure is small, resulting in the reduction of the tensile break strength and the tensile break elongation of the pinch off portion Po. For this reason, it is important for the mold closing pressure to be set at a proper value according to the thickness of the pinch off portion Po. Specifically, it is proper that the value obtained by dividing the mold closing pressure by the thickness of the pinch off portion Po is set at 3.5 MPa/cm or more, and in particular preferably 4.0 MPa/cm or more.

Then, a compressed air is blown into the parison P from a blow pin (not shown), thereby to press the parison P against the molding surfaces 31 of the molds 30, and to cool it. Thus, a liner for a pressure resistant container which is a molded product is molded (blow molding step). The timing for blowing a compressed air is desirably the time point when 0.5 to 1.5 seconds has elapsed after mold closing. Thereafter, the openably and closably driving unit is driven at the instant when the molds 30 have been cooled to a prescribed temperature, thereby to open the molds 30. Then, a molded product (liner for a pressure resistant container) is taken out to complete the manufacturing of the liner.

### <Examples>

Subsequently, the invention will be describedmore specifically by way of examples. In the examples, four kinds of wholly aromatic polyester liquid crystal resins (polymers A to D) are produced. These four kinds of liquid crystal resins are subjected to heat treatments under various conditions (temperature / time), and then, heated and molten at various temperatures. Blow molding is thus performed, and the resulting blow molded products are evaluated for the characteristics.

Incidentally, the methods for evaluating the characteristics performed in the examples are as follows.
(1) Melting point of liquid crystal resin: the resulting pellets made of the liquid crystal resin were subjected to the measurement by a differential scanning calorimetry (DSC) at a heating rate of 20 °C/min according to JIS K7121.
(2) Melt viscosity: the apparent melt viscosity at a shear rate of 1000/sec was measured by means of a capillary type rheometer (Capilograph 1B manufactured by Toyo Seiki Seisaku-sho Ltd.) according to ISO 11443. For the measurement, an orifice with a diameter of 1.0 mm and a length of 20 mm was used.
(3) Appearance of molded product (breakage of molded product): cylindrical blow molded products with a diameter of 120 mm and a length of 280 mm were molded at the molding temperatures shown in Table 2 by means of a blow molding device (S-45ND manufactured by PLACO Co., Ltd.). Whether the molded products had been broken or not was visually evaluated after blowing.
(4) Tensile break elongation: a test piece was cut in the shape of a dumbbell piece from the body portion of each blow molded product according to ASTM D638, type 5, and was measured for the tensile break elongation in the parison longitudinal axis direction (which is hereinafter referred to as the "vertical direction"), and in the direction at right angles to the parison longitudinal axis direction (which is hereinafter referred to as the "horizontal direction ") by means of Tensilon RTC-1325Amanufactured by ORIENTEC Co., Ltd.
(5) Pinch off portion tensile break elongation: from the pinch off portion of each blow molded product, a test piece was cut in the shape of a dumbbell piece at right angles to the pinch off line according to ASTMD638, type 5 so that the tensile break elongation of the pinch off line canbemeasured. By the use of TensilonRTC-1325A manufactured by ORIENTEC Co., Ltd., the pinch off portion tensile break elongation was measured.
(6) Thickness of pinch off portion: the thickness of the pinch off portion of each test piece used for the measurement of the pinch off portion tensile break elongation was measured.

First, a description will be given to production examples of four kinds of the wholly aromatic polyester liquid crystal resins (polymers A to D).

### [Production Example 1] (Production of polymer A)

345 parts by weight of P-hydroxybenzoic acid, 175 parts by weight of 6-hydroxy-2-naphthoic acid, 0.02 part by weight of potassium acetate, and 350 parts by weight of acetic anhydride were respectively charged in a reactor equipped with a stirrer and a distillation tube, and nitrogen replacement was sufficiently performed. Then, the temperature was raised to 150 °C under normal pressure to start stirring. Stirring was performed at 150 °C for 30 minutes, and the temperature was further raised gradually to distill away by-produced acetic acid. When the temperature reached 300 °C, the pressure in the reactor was gradually reduced. Stirringwas continued under a pressure of 5 torr for 1 hour. At the instant when an obj ective stirring torque was reached, the discharge port at the lower part of the reactor was opened, and the resin was taken out in the form of a strand by using the nitrogen pressure. The discharged strand was made into the form of pellets by apelletizer. The wholly aromatic polyester liquid crystal resin (polymer A) had a melting point of 280 °C, and a melt viscosity at 300 °C of 35 Pa.s.

### [Production Example 2] (Production of polymer B)

173 parts by weight of P-hydroxybenzoic acid, 38 parts by weight of 6-hydroxy-2-naphthoic acid, 52 parts by weight of 4,4'-dihydroxybiphenyl, 65 parts by weight of terephthalic acid, 17 parts by weight of 4-acetaminophenol, 0.04 parts by weight of potassium acetate, and 221 parts by weight of acetic anhydride were respectively charged in a reactor equipped with a stirrer and a distillation tube, and nitrogen replacement was sufficiently performed. Then, the temperature was raised to 150 °C under normal pressure to start stirring. Stirring was performed at 150 °C for 30 minutes, and the temperature was further raised gradually to distill away by-produced acetic acid. When the temperature reached 350 °C, the pressure in the reactor was gradually reduced. Stirring was continued under a pressure of 5 torr for 1 hour. At the instant when an objective stirring torque was reached, the discharge port at the lower part of the reactor was opened, and the resin was taken out in the form of a strand by using the nitrogen pressure. The discharged strand was made into the form of pellets by a pelletizer. The wholly aromatic polyester liquid crystal resin (polymer B) had a melting point of 300 °C, and a melt viscosity at 320 °C of 25 Pa·s.

### [Production Example 3] (Production of polymer C)

285 parts by weight of P-hydroxybenzoic acid, 30 parts by weight of 6-hydroxy-2-naphthoic acid, 80 parts by weight of 4,4'-dihydroxybiphenyl, 25 parts by weight of 4-acetaminophenol, 100 parts by weight of terephthalic acid, 0.07 part by weight of potassium acetate, and 350 parts by weight of acetic anhydride were respectively charged in a reactor equipped with a stirrer and a distillation tube, and nitrogen replacement was sufficiently performed. Then, the temperature was raised to 150 °C under normal pressure to start stirring. Stirring was performed at 150 °C for 80 minutes, and the temperature was further raised gradually to distill away by-produced acetic acid. When the temperature reached 350 °C, the pressure in the reactor was gradually reduced. Stirring was continued under a pressure of 5 torr for 1 hour. At the instant when an objective stirring torque was reached, the discharge port at the lower part of the reactor was opened, and the resin was taken out in the form of a strand by using the nitrogen pressure. The discharged strand was made into the formof pellets by a pelletizer. The wholly aromatic polyester liquid crystal resin (polymer C) had a melting point of 340 °C, and a melt viscosity at 360 °C of 10 Pa·s.

### [Production Example 4] (Production of polymer D)

93 parts by weight of P-hydroxybenzoic acid, 79 parts by weight of 6-hydroxy-2-naphthoic acid, 39 parts by weight of 4,4'-dihydroxybiphenyl, 13 parts by weight of 4-acetaminophenol, 49 parts by weight of terephthalic acid, 0.02 part by weight of potassium acetate, and 167 parts by weight of acetic anhydride were respectively charged in a reactor equipped with a stirrer and a distillation tube, and nitrogen replacement was sufficiently performed. Then, the temperature was raised to 150 °C under normal pressure to start stirring. Stirring was performed at 150 °C for 30 minutes, and the temperature was further raised gradually to distill away by-produced acetic acid. When the temperature reached 350 °C, the pressure in the reactor was gradually reduced. Stirring was performed for another 30 minutes from the instant when the pressure reached 5 torr. The discharge port at the lower part of the reactor was opened, and the resin was taken out in the form of a strand by using the nitrogen pressure. The discharged strand was made into the form of pellets by a pelletizer. The wholly aromatic polyester liquid crystal resin (polymer D) had a melting point of 215 °C, and a melt viscosity at 230 °C of 80 Pa·s.

The compositions of the polymers A to D are shown in Table 1. All of the polymers A to D showed optical anisotropy in molten state.

**[Table 1]**

| Example | Polymer | Repeating unit composition ratio (mol%) | | | | |
|---|---|---|---|---|---|---|
| | | I | II | III | IV | V |
| Production Example 1 | A | 27 | 73 | - | - | - |
| Production Example 2 | B | 9 | 56 | 12.5 | 5 | 17.5 |
| Production Example 3 | C | 5 | 60 | 12.5 | 5 | 17.5 |
| Production Example 4 | D | 25 | 40 | 12.5 | 5 | 17.5 |

Then, a description will be given to "Examples" and "Comparative Examples" in which the polymers A to D are subj ected to heat treatments under the conditions shown in Table 2, and the post-heat treatment resins are heated and molten to be blow molded, and the resulting blow molded products are evaluated for the characteristics, by reference to Tables 3 to 5.

**[Table 2]**

| Example | Kind | Produced resin | | Heat treatment | | Post-heat treatment resin | |
|---|---|---|---|---|---|---|---|
| | | melting point (°C) | melt viscosity (Pa.s) | Temperature (°C) | Time (hr) | melting point (°C) | melt viscosity (Pa.s) |
| Examples 1 to 11 Comparative Examples 5 to 7 | B | 300 | 25(320) | 270 | 8 | 308 | 75 (320) |
| Comparative Example 1 | B | 300 | 25(320) | 270 | 2 | 301 | 32 (320) |
| Example 12 | C | 340 | 10(360) | 280 | 8 | 344 | 65 (360) |
| Comparative Example 2 | C | 340 | 10(360) | 280 | 2 | 340 | 28 (360) |
| Comparative Example 3 | A | 280 | 35(300) | 260 | 10 | 284 | 128 (300) |
| Comparative Example 4 | D | 215 | 80(230) | - | - | - | - |

**[Table 3]**

| Example | | | Example 1 | Example 2 | Example 3 | Example 4 | Example 5 | Example 6 |
|---|---|---|---|---|---|---|---|---|
| polymer | | | B | B | B | B | B | B |
| Produced resin | melting point | °C | 308 | 308 | 308 | 308 | 308 | 308 |
| | melt viscosity | Pa·s | 75(320) | 75(320) | 75(320) | 75(320) | 75(320) | 75(320) |
| Blow molding | Temperature | °C | 320 | 320 | 320 | 320 | 320 | 320 |
| | Blow ratio | | 2.4 | 2 | 5 | 2.4 | 2.4 | 1.6 |
| | Mold temperature | °C | 80 | 60 | 80 | 40 | 140 | 80 |
| | Pinch portion shape | | dual | dual | dual | dual | dual | dual |
| | Mold closing pressure | MPa | 1.9 | 1.9 | 1.9 | 1.9 | 1.9 | 1.9 |
| | Extrusion rate | kg/min | 3 | 3 | 3 | 3 | 3 | 3 |
| | Shear rate | 1/sec | 400 | 600 | 300 | 400 | 400 | 400 |
| | Breakage of molded product | | None | None | None | None | None | None |
| Tensile test | Vertical direction (MD) elongation | % | 6.3 | 8 | 5.4 | 6.1 | 6.2 | 8.1 |
| | Horizontal direction (TD) elongation | % | 8.5 | 12.3 | 5.8 | 9.2 | 7.8 | 16.4 |
| | MD/TD | | 0.74 | 0.49 | 0.92 | 0.66 | 0.79 | 0.37 |
| Pinch off portion thickness | | mm | 3.22 | 3.34 | 3.06 | 3.24 | 3.14 | 3.4 |
| Pinch off portion tensile break elongation | | % | 2.4 | 2.0 | 2.1 | 2.1 | 2.2 | 1.9 |
| Mold closing pressure / pinch off portion thickness | | MPa/cm | 5.8 | 5.7 | 6.2 | 5.9 | 6.1 | 5.6 |

**[Table 4]**

| Example | | | Example 7 | Example 8 | Example 9 | Example 10 | Example 11 | Example 12 |
|---|---|---|---|---|---|---|---|---|
| polymer | | | B | B | B | B | B | C |
| Produced resin | melting point | °C | 308 | 308 | 308 | 308 | 308 | 344 |
| | melt viscosity | Pa·s | 75(320) | 75(320) | 75(320) | 75(320) | 75(320) | 65(360) |
| Blow molding | Temperature | °C | 320 | 320 | 320 | 320 | 320 | 350 |
| | Blow ratio | | 8 | 2.4 | 2.4 | 2.4 | 2.4 | 2.4 |
| | Mold temperature | °C | 80 | 80 | 80 | 20 | 160 | 80 |
| | Pinch portion shape | | dual | single | dual | dual | dual | dual |
| | Mold closing pressure | MPa | 1.9 | 1.1 | 1.1 | 1.9 | 1.9 | 1.9 |
| | Extrusion rate | kg/min | 3 | 3 | 3 | 3 | 3 | 1.8 |
| | Shear rate | 1/sec | 400 | 400 | 400 | 400 | 400 | 240 |
| | Breakage of molded product | | None | None | None | None | None | None |
| Tensile test | Vertical direction (MD) elongation | % | 5.8 | 6.2 | 6.3 | 6 | 6.2 | 5.2 |
| | Horizontal direction (TD) elongation | % | 4.6 | 8.6 | 8.4 | 10.1 | 7.6 | 7.6 |
| | MD/TD | | 1.28 | 0.72 | 0.75 | 0.59 | 0.82 | 0.68 |
| Pinch off portion thickness | | mm | 3.0 | 2.53 | 3.22 | 3.31 | 2.2 | 3.01 |
| Pinch off portion tensile break elongation | | % | 2.0 | 2.2 | 1.8 | 1.8 | 1.8 | 2.2 |
| Mold closing pressure / pinch off portion thickness | | MPa/cm | 6.3 | 4.3 | 3.4 | 5.7 | 8.6 | 6.3 |

**[Table 5]**

| Example | | | Comparative Example 4 | Comparative Example 5 | Comparative Example 6 | Comparative Example 7 |
|---|---|---|---|---|---|---|
| polymer | | | D | B | B | B |
| Produced resin | melting point | °C | 215 | 308 | 308 | 308 |
| | melt viscosity | Pa·s | 80 (230) | 75 (320) | 75 (320) | 75 (320) |
| Blow molding | Temperature | °C | 230 | 360 | 320 | 320 |
| | Blow ratio | | 2.4 | 2.4 | 2.4 | 2.4 |
| | Mold temperature | °C | 90 | 80 | 80 | 60 |
| | Pinch portion shape | | Dual | Dual | Dual | Dual |
| | Mold closing pressure | MPa | 1.9 | 1.9 | 1.9 | 1.9 |
| | Extrusion rate | kg/min | 3 | 3 | 0.15 | 9 |
| | Shear rate | 1/sec | 400 | 400 | 30 | 1200 |
| | Breakage of molded product | | None | None | None | May be observed |
| Tensile test | Vertical direction (MD) elongation | % | 1.9 | 10 | 5.2 | 6.1 |
| | Horizontal direction (TD) elongation | % | 2.7 | 1.9 | 3.3 | 2.2 |
| | MD/TD | | 0.70 | 5.26 | 1.58 | 2.77 |
| Pinch off portion thickness | | mm | 3.2 | 1.2 | 5 | 3.2 |
| Pinch off portion tensile break elongation | | % | 1.5 | 1.7 | 0.4 | 2.3 |
| Mold closing pressure / pinch off portion thickness | | MPa/cm | 5.9 | 15.8 | 3.8 | 5.9 |

### [Examples 1 to 11]

The polymer B produced in Production Example 2 was subjected to a heat treatment under the conditions shown in Table 2, thereby to obtain a post-heat treatment resin with a melting point of 308 °C, and a melt viscosity of 75 Pa.s. By the use of the post-heat treatment resin, blow molding was performed under the conditions shown in Table 3, and the characteristics were evaluated. The evaluation results are shown in Tables 3 and 4.

### [Example 12]

The polymer C produced in Production Example 3 was subjected to a heat treatment under the conditions shown in Table 2, thereby to obtain a post-heat treatment resin with a melting point of 344 °C, and a melt viscosity of 65 Pa·s. By the use of the post-heat treatment resin, blow molding was performed under the conditions shown in Table 3, and the characteristics were evaluated. The evaluation results are shown in Table 4.

The blow molded products obtained in Examples 1 to 12 exhibited a tensile break elongation of "3 % or more" both in the vertical direction and in the horizontal direction of the body portion, and exhibited a tensile break elongation of the pinch off portion of "1 % or more" (2 % or more in Examples 1 to 5, Example 7, Example 8, and Example 12), which surpass the characteristics required of the liner for a pressure resistant container. Further, the thickness of the pinch off portion of every blow molded product obtained in Examples 1 to 12 were "2 mm or more".

Incidentally, in Example 6, the blow-up ratio is as relatively small as 1. 6. Accordingly, the drawing in the horizontal direction of the parison becomes relatively small, and the tensile break elongation in the horizontal direction of the resulting blow molded product is larger as compared with the tensile break elongation in the vertical direction. However, either tensile break elongation is "3 % or more", which satisfies the characteristics required of the liner for a pressure resistant container. Therefore, there is no problem (see, Table 3).

Whereas, in Example 8, a "single" pinch portion is adopted as the shape of each pinch portion of the molds, and hence the thickness of the resulting blow molded product is relatively thin. However, the tensile break elongation of the pinch off portion is "1 % or more", which satisfies the characteristics required of the liner for a pressure resistant container. Therefore, there is no problem (see, Table 4).

Whereas, in Example 9, the value obtained by dividing the mold closing pressure by the thickness of the pinch off portion is as relatively small as 3.4 MP/cm, and hence the adhesion force between the portions of the parison is relatively small. However, the tensile break elongation of the pinch off portion of the resulting blow molded product is "1 % or more", which satisfies the characteristics required of the liner for a pressure resistant container. Therefore, there is no problem (see, Table 4).

Whereas, in Example 10, the temperature of the molds in the mold closing step is as relatively low as 20 °C, so that the parison is cooled upon contact with the molds. As a result, the tensile break elongation of the pinch off portion of the resulting blow molded product is relatively small. However, the tensile break elongation is "1 % or more", which satisfies the characteristics required of the liner for a pressure resistant container. Therefore, there is no problem (see, Table 4).

Whereas, in Example 11, the temperature of the molds in the mold closing step is as relatively high as 160 °C, so that the cooling rate of the parison is low. Accordingly, the parison becomes more likely to be stretched thinly by blow up, so that the pinch off portion becomes relatively thin. However, the tensile break elongation of the pinch off portion of the resulting blow molded product is "1 % ormore", which satisfies the characteristics required of the liner for a pressure resistant container. Therefore, there is no problem (see, Table 4) .

### [Comparative Example 1]

The polymer B produced in Production Example 2 was subjected to a heat treatment under the conditions shown in Table 2, thereby to obtain a post-heat treatment resin with a melting point of 301 °C, and a melt viscosity of 32 Pa.s. By the use of the post-heat treatment resin, blowmoldingwas performed under the same conditions as in Example 1, and the characteristics were evaluated. The post-heat treatment resin used in Comparative Example 1 was low in melt viscosity and insufficient in draw down resistance. Therefore, the molded product was broken upon blow up, so that it was not possible to obtain a favorable molded product.

### [Comparative Example 2]

The polymer C produced in Production Example 3 was subjected to a heat treatment under the conditions shown in Table 2, thereby to obtain a post-heat treatment resin with a melting point of 340 °C, and a melt viscosity of 28 Pa.s. By the use of the post-heat treatment resin, blow molding was performed under the same conditions as in Example 1, except that the blow molding temperature was set at 350 °C. Then, the characteristics were evaluated. The post-heat treatment resin used in Comparative Example 2 was low inmelt viscosity and insufficient in draw down resistance. Therefore, the molded product was broken upon blow up, so that it was not possible to obtain a favorable molded product.

### [Comparative Example 3]

The polymer A produced in Production Example 1 was subjected to a heat treatment under the conditions shown in Table 2, thereby to obtain a post-heat treatment resin with a melting point of 284 °C, and a melt viscosity of 128 Pa·s. By the use of the post-heat treatment resin, blow molding was performed under various blow molding conditions, and the characteristics were evaluated. The post-heat treatment resin used in Comparative Example 3 is the one which does not have a required composition (which does not contain (III) an aromatic diol residue, (IV) a 4-aminophenol residue, and (V) an aromatic dicarboxylic acid residue). Therefore, the molded product was often broken (defective ratio 70 %) upon blow up, so that it was not possible to obtain a practical molded product.

### [Comparative Example 4]

By the use of the polymer D with a melting point of 215 °C and a melt viscosity of 80 Pa·s produced in Production Example 4 (non-heat-treated), blow molding was performed under the conditions shown in Table 5, and the characteristics were evaluated. The evaluation results are shown in Table 5. The polymer D used in Comparative Example 4 is low in melting point and small in melt viscosity. Therefore, the tensile break elongation in the vertical direction of the body portion of the resulting blow molded product is less than 2 % (1.9 %), which does not satisfy the characteristics required of the liner for a pressure resistant container.

### [Comparative Examples 5 to 7]

The polymer B produced in Production Example 2 was subjected to a heat treatment under the conditions shown in Table 2, thereby to obtain a post-heat treatment resin with a melting point of 308 °C, and a melt viscosity of 75 Pa.s. By the use of the post-heat treatment resin, blow molding was performed under the conditions shown in Table 4, and the characteristics were evaluated. The evaluation results are shown in Table 5.

In Comparative Example 5, the melting temperature of the resin was the temperature (360 °C) higher than the melting point of the resin + 40 °C(348 °C) . Therefore, the draw down resistance of the parison was reduced, so that the tensile break elongation in the horizontal direction of the body portion of the resulting molded product was less than 2 % (1.9 %), which does not satisfy the characteristics required of the liner for a pressure resistant container.

Whereas, in Comparative Example 6, the resin had an extrusion rate of less than 0.3 kg/min (0.15 kg/min), and a shear rate of less than 50/sec (30/sec), so that the parison was cooled. As a result, the tensile break elongation of the pinch off portion of the resulting blow molded product was less than 1 % (0.4 %), which does not satisfy the characteristics required of the liner for a pressure resistant container.

Whereas, in Comparative Example 7, the resin had an extrusion rate of 5 kg/min (9 kg/min) or more, and a shear rate of 1000/sec (1200/sec) or more, so that the upright standing property of the parison was reduced. When blow molding was performed plural times, breakage occurred in the blow molded product in some cases.

In the production method in accordance with the embodiments described up to this point, a wholly aromatic polyester amide liquid crystal resin having a specific composition is obtained. The liquid crystal resin is heated and molten at a specific temperature. Blow molding is performed by extruding a cylindrical parison at a specific extrusion rate and shear rate. Therefore, it is possible to achieve a tensile break elongation of "2 % or more" in the vertical direction and in the horizontal direction of the body portion of the blow molded product (liner). In addition, it is possible to achieve a tensile break elongation of "1 %" or more in the pinch off portion (see, Examples 1 to 12 : Tables 3 and 4). Further, by taking advantage of the characteristics of the liquid crystal resin, it is possible to obtain a liner having excellent gas barrier performance.

Whereas, in the production method in accordance with the embodiments described up to this point, the ratio (blow-up ratio) of the outer diameter of the parison formed in the parison forming step and the diameter of the cavity formed by the molds is set at a specific ratio (2.0 to 8.0). Therefore, it is possible to improve the anisotropy of the liquid crystal resin, and it is possible to improve the tensile break elongation both in the vertical direction and in the horizontal direction of the body portion of the blow molded product (liner) (see, Examples 1 to 5 and Examples 7 to 12: Tables 3 and 4).

Whereas, in the production method in accordance with the embodiments described up to this point, the molds are heated in a specific temperature range (40 °C to 150 °C) when the mold closing step is performed. Therefore, it is possible to enhance the weldability of the liquid crystal resin in the pinch off portion of the blow molded product (liner), and it is possible to improve the tensile break elongation of the pinch off portion (see, Examples 1 to 9 and Example 12: Tables 3 and 4).

Whereas, in the production method in accordance with the embodiments described up to this point, the value obtained by dividing the mold closing pressure by the thickness of the pinch off portion is set at a specific threshold value (3.5 MPa/cm) or more when the mold closing step is carried out. Therefore, it is possible to enhance the weldability of the liquid crystal resin in the pinch off portion, and it is possible to improve the tensile break elongation of the pinch off portion (see, Examples 1 to 8 and Examples 10 to 12: Tables 3 and 4).

Whereas, in the production method in accordance with the embodiments described up to this point, the dual pinch portions are disposed in the molds, and a gap is formed between the dual pinch portions upon closing of the molds in the mold closing step. Therefore, when the parison is pinched off in the mold closing step, it is possible to store the liquid crystal resin in the gap formed between the dual pinch portions. Therefore, it is possible to prevent the liquid crystal resin from flowing from the pinch off portion of the blow molded product (liner) to the outside of the molds when mold closing is carried out. Therefore, it is possible to inhibit the reduction of the thickness of the pinch off portion. As a result, it is possible to enhance the weldability of the pinch off portion, and it is possible to improve the tensile break elongation of the pinch off portion (see, Examples 1 to 7 and Examples 9 to 12: Tables 3 and 4).

Further, the blow molded products (liners made of a liquid crystal resin) manufactured in Examples 1 to 12 described up to this point have a tensile break elongation at the body portion of "3 % or more", and a tensile break elongation at the pinch off portion of "1 % or more". Accordingly, they satisfy the required characteristics necessary for the body portion and the pinch off portion of the liner for a pressure resistant container, and they are excellent in gas barrier performance owing to the characteristics of the liquid crystal resin. Therefore, they can be preferably used as a liner for a pressure resistant container substituting for a liner made of high density polyethylene.

Still further, for the blow molded products (liners made of a liquid crystal resin) manufactured in Examples 1 to 12 described up to this point, the thickness of the pinch off portion is equal to a specific threshold value (2 mm) or more, resulting in high weldability of the pinch off portion. This results in the one having high tensile break elongation.

## Claims

1. A method for manufacturing a liner for a pressure resistant container, the method comprising:
- a resin melting step of heating and melting a specific wholly aromatic polyester amide liquid crystal resin, wherein the specific wholly aromatic polyester amide liquid crystal resin has:
- repeating polymer units of:
(I) a 6-hydroxy-2-naphthoic acid residue: 1 to 15 mol%,
(II) a 4-hydroxybenzoic acid residue: 40 to 70 mol%.
(III) an aromatic diol residue: 5 to 28.5 mol%,
(IV) a 4-aminophenol residue: 1 to 20 mol%, and
(V) an aromatic dicarboxylic acid residue: 6 to 29.5 mol%,
- a melting point of 270°C to 370°C, and
- a melt viscosity of 60 Pa·s to 200 Pa·s at a shear rate of 1000/sec at a temperature higher by 10 °C to 20 °C than the melting point, wherein the resin melting step is performed in a temperature range of the melting point to the melting point + 40 °C;
- a parison forming step of extruding a cylindrical parison (P) using the specific wholly aromatic polyester amide liquid crystal resin molten in the resin melting step, wherein the extruding and the forming is performed at an extrusion rate of 0.3 kg/min or more and less than 5 kg/min, and at a shear rate of 50/sec or more and less than 1000/sec, in the parison forming step;
- a mold closing step of arranging the parison (P) formed in the parison forming step between a pair of molds (30) forming a cylindrical cavity, and closing the molds (30); and
- a molding step of blowing a gas into the interior of the parison (P) subjected to the molds (30) closed in the mold closing step, and molding of a liner.

2. The method according to claim 1,
wherein a blow-up ratio which is a ratio of the outer diameter of the parison (P) formed in the parison forming step and the diameter of the cavity (C) formed by the molds is set at 2.0 to 8.0.

3. The method according to claim 1 or 2,
wherein the molds (30) are heated in a temperature range of 40 °C to 150 °C, in the mold closing step.

4. The method according to any one of claims 1 to 3,
wherein a value obtained by dividing a mold closing pressure by a thickness of a pinch off portion (Po) is set at 3.5 MPa/cm or more, in the mold closing step.

5. The method according to any one of claims 1 to 4,
wherein the molds (30) comprise dual pinch portions (32), and a gap (32c) is formed between the dual pinch portions (32) upon closing of the molds (30) in the mold closing step.

6. A liner made of a liquid crystal resin having a tensile break elongation in every direction of the body portion of 2% or more and being obtainable by the method according to any one of claims 1 to 4.

7. The liner according to claim 6,
wherein a tensile break elongation of the pinch off portion (Po) is 1 % or more.

8. The liner according to claim 7,
wherein the tensile break elongation in every direction of the body portion is 3 % or more.

9. The liner according to claim 7 or 8,
wherein a tensile break elongation of pinch off portion (Po) is 2 % or more.

10. The liner according to any one of claims 6 to 9,
wherein a thickness of a pinch off portion (Po) is 2 mm or more.

## Patentansprüche

1. Verfahren zum Herstellen einer Auskleidung für einen druckbeständigen Behälter, wobei das Verfahren folgendes aufweist:
- einen Schritt zum Schmelzen eines Harzes, bei dem ein bestimmtes, flüssigkristallines, vollständig aromatisches Polyesteramidharz erwärmt und geschmolzen wird, wobei das bestimmte, flüssigkristalline, vollständig aromatische Polyesteramidharz folgendes aufweist:
• Polymerstruktureinheiten aus
(I) einem 6-Hydroxy-2-naphthoesäure-Rest: 1 bis 15 Mol-%,
(II) einem 4-Hydroxybenzoesäure-Rest: 40 bis 70 Mol-%,
(III) einem aromatischen Diol-Rest: 5 bis 28,5 Mol-%,
(IV) einem 4-Aminophenol-Rest: 1 bis 20 Mol-% und
(V) einem aromatischen Dicarbonsäure-Rest: 6 bis 29,5 Mol-%,
• einen Schmelzpunkt von 270 °C bis 370 °C, und
• eine Schmelzviskosität von 60 bis 200 Pa·s bei einer Scherrate von 1000/s und einer Temperatur, die um 10 °C bis 20 °C höher als der Schmelzpunkt ist, wobei der Schritt zum Schmelzen des Harzes in einem Temperaturbereich zwischen dem Schmelzpunkt und dem Schmelzpunkt + 40 °C erfolgt;
- einen Schritt zum Formen eines Rohlings, bei dem ein zylindrischer Rohling (P) extrudiert wird, wobei das bestimmte, flüssigkristalline, vollständig aromatische Polyesteramidharz verwendet wird, das beim Schritt zum Schmelzen des Harzes geschmolzen worden ist, wobei das Extrudieren und Formen beim Schritt zum Formen des Rohlings mit einer Extrusionsrate von 0,3 kg/min oder mehr und weniger als 5 kg /min und mit einer Scherrate von 50/s oder mehr und weniger als 1000/s erfolgt,
- einen Schritt zum Schließen der Form, bei dem der Rohling (P), der beim Schritt zum Formen des Rohlings geformt worden ist, zwischen einem Paar Formen (30), die einen zylindrischen Hohlraum bilden, angeordnet wird und die Formen (30) geschlossen werden; und
- einen Formgebungsschritt, bei dem ein Gas in das Innere des Rohlings (P) geblasen wird, der den Formen (30) ausgesetzt ist, die beim Schritt zum Schließen der Form geschlossen worden sind, und eine Auskleidung geformt wird.

2. Verfahren nach Anspruch 1,
wobei das Aufblasverhältnis, das das Verhältnis zwischen dem Außendurchmesser des Rohlings (P), der beim Schritt zum Formen des Rohlings geformt wird, und dem Durchmesser des Hohlraums (C) darstellt, der von den Formen gebildet wird, mit 2,0 bis 8,0 festgelegt wird.

3. Verfahren nach Anspruch 1 oder 2,
wobei die Formen (30) beim Schritt zum Schließen der Form in einem Temperaturbereich von 40 °C bis 150 °C erwärmt werden.

4. Verfahren nach einem der Ansprüche 1 bis 3,
wobei der Wert, der durch Teilen des Formschließdrucks durch die Dicke der Quetschzone (Po) erhalten wird, beim Schritt zum Schließen der Form auf 3,5 MPa/cm oder mehr eingestellt wird.

5. Verfahren nach einem der Ansprüche 1 bis 4,
wobei die Formen (30) zwei Quetschzonen (32) aufweisen und beim Schritt zum Schließen der Form zwischen den zwei Quetschzonen (32) beim Schließen der Formen (30) ein Spalt (32c) gebildet wird.

6. Auskleidung aus einem flüssigkristallinen Harz, die eine Zugbruchdehnung in jeder Richtung des Auskleidungsbereichs von 2 % oder mehr aufweist und mit dem Verfahren nach einem der Ansprüche 1 bis 4 erhalten werden kann.

7. Auskleidung nach Anspruch 6,
wobei die Zugbruchdehnung der Quetschzone (Po) 1 % oder mehr beträgt.

8. Auskleidung nach Anspruch 7,
wobei die Zugbruchdehnung in jeder Richtung des Grundkörperbereichs 3 % oder mehr beträgt.

9. Auskleidung nach Anspruch 7 oder 8,
wobei die Zugbruchdehnung der Quetschzone (Po) 2 % oder mehr beträgt.

10. Auskleidung nach einem der Ansprüche 6 bis 9,
wobei die Dicke der Quetschzone (Po) 2 mm oder mehr beträgt.

## Revendications

1. Procédé de fabrication d'un revêtement intérieur pour un récipient résistant à la pression, le procédé comprenant:
- une étape de fusion de résine consistant à chauffer et à porter à fusion une résine cristalline liquide spécifique à base d'un polyester amide 100 % aromatique, dans laquelle la résine cristalline liquide spécifique à base d'un polyester amide 100 % aromatique a:
- des motifs polymères à répétition comprenant:
(I) un résidu acide 6-hydroxy-2-naphtoïque: 1 à 15 % en mol,
(II) un résidu acide 4-hydroxybenzoïque: 40 à 70 % en mol,
(III) un résidu diol aromatique: 5 à 28,5 % en mol,
(IV) un résidu 4-aminophénol: 1 à 20 % en mol, et
(V) un résidu acide dicarboxylique aromatique: 6 à 29,5 % en mol,
- un point de fusion de 270 °C à 370 °C, et
- une viscosité à l'état fondu de 60 à 200 Pa.s à une vitesse de cisaillement de 1000/sec à une température supérieure de 10 °C à 20 °C à la température de fusion, dans lequel l'étape de fusion de la résine est mise en oeuvre dans une plage de températures allant du point de fusion au point de fusion + 40°C;
- une étape de formation de paraison consistant à extruder une paraison cylindrique (P) en utilisant la résine cristalline liquide spécifique à base d'un polyester amide 100 % aromatique fondue dans l'étape de fusion de la résine, dans laquelle l'extrusion et le formage est effectué à une vitesse d'extrusion de 0,3 kg/min ou plus et inférieure à 5 kg/min, et à une vitesse de cisaillement de 50/sec ou plus et inférieure à 1000/sec, dans l'étape de formation de paraison;
- une étape de fermeture de moules consistant à disposer la paraison (P) formée dans l'étape de formation de paraison entre une paire de moules (30) définissant une cavité cylindrique, et à fermer les moules (30); et
- une étape de moulage consistant à insuffler un gaz à l'intérieur de la paraison (P) soumise aux moules (30) fermés dans l'étape de fermeture des moules, et à mouler un revêtement intérieur.

2. Procédé selon la revendication 1,
dans lequel un taux de soufflage qui est un rapport du diamètre extérieur de la paraison (P) formée dans l'étape de formation de paraison et du diamètre de la cavité (C) formée par les moules est fixé à 2,0-8,0.

3. Procédé selon les revendications 1 ou 2,
dans lequel les moules (30) sont chauffés dans une plage de températures de 40 °C à 150 °C, dans l'étape de fermeture des moules.

4. Procédé selon l'une quelconque des revendications 1 à 3,
dans lequel une valeur obtenue en divisant une pression de fermeture des moules par une épaisseur d'une partie pincée (Po) est fixée à 3,5 MPa/cm ou plus, dans l'étape de fermeture des moules.

5. Procédé selon l'une quelconque des revendications 1 à 4,
dans lequel les moules (30) comprennent des doubles parties pincées (32), et un espace (32c) est formé entre les doubles parties pincées (32) lors de la fermeture des moules (30) dans l'étape de fermeture des moules.

6. Revêtement intérieur à base d'une résine cristalline liquide ayant un allongement à la rupture par traction dans chaque direction de la partie du corps de 2 % ou plus et pouvant être obtenu par le procédé selon l'une quelconque des revendications 1 à 4.

7. Revêtement intérieur selon la revendication 6,
dans lequel un allongement à la rupture par traction de la partie pincée (Po) est de 1 % ou plus.

8. Revêtement intérieur selon la revendication 7,
dans lequel l'allongement à la rupture par traction dans chaque direction de la partie du corps est de 3 % ou plus.

9. Revêtement intérieur selon les revendications 7 ou 8,
dans lequel un allongement à la rupture par traction de la partie pincée (Po) est de 2 % ou plus.

10. Revêtement intérieur selon l'une quelconque des revendications 6 à 9,
dans lequel une épaisseur d'une partie pincée (Po) est de 2 mm ou plus.
